Europäisches Patentamt

European Patent Office

Office européen des brevets

(11) Numéro de publication : **0 412 003 B1**

# (12) FASCICULE DE BREVET EUROPEEN

(45) Date de publication du fascicule du brevet :
**31.08.94 Bulletin 94/35**

(51) Int. Cl.$^5$ : **H04N 7/01, H04N 5/44**

(21) Numéro de dépôt : **90402190.4**

(22) Date de dépôt : **31.07.90**

(54) **Dispositif de transformation d'une information de mouvement en un signal de détection de mouvement à la fréquence trame et au nombre de lignes souhaitées pour un récepteur de télévision haute définition.**

(30) Priorité : **04.08.89 FR 8910524**

(43) Date de publication de la demande :
**06.02.91 Bulletin 91/06**

(45) Mention de la délivrance du brevet :
**31.08.94 Bulletin 94/35**

(84) Etats contractants désignés :
**DE ES FR GB IT**

(56) Documents cités :
**EP-A- 0 180 661
EP-A- 0 241 284
US-A- 4 661 850**

(73) Titulaire : **LABORATOIRE EUROPEEN DE RECHERCHES ELECTRONIQUES AVANCEES
9, Place des Vosges
La Défense 5
F-92400 Courbevoie (FR)**

(72) Inventeur : **Gillies, David
THOMSON-CSF SCPI-Cedex 67
F-92045 Paris la Défense (FR)**
Inventeur : **Watson, Mark
THOMSON-CSF SCPI-Cedex 67
F-92045 Paris la Défense (FR)**

(74) Mandataire : **Ruellan-Lemonnier, Brigitte et al
THOMSON-CSF,
SCPI,
B.P. 329,
50, rue Jean-Pierre Timbaud
F-92402 Courbevoie Cédex (FR)**

Jouve, 18, rue Saint-Denis, 75001 PARIS

## Description

La présente invention concerne un dispositif pour transformer l'information de mouvement contenue dans le signal DATV associé à un signal vidéo de type haute définition à une première fréquence trame en un signal de détection de mouvement à une seconde fréquence trame. Elle concerne, plus particulièrement, un dispositif qui est utilisé en association avec un dispositif de conversion de fréquence trame pour un récepteur de télévision haute définition tel que décrit dans le brevet Français FR-A-2 644 956 du 28 septembre 1990 déposé par la Demanderesse.

Dans cette demande de brevet, on a décrit un dispositif permettant de convertir les signaux vidéo reçus en entrée d'un récepteur de télévision haute définition, notamment les signaux d'entrée 1250/2:1/50Hz HD-MAC décodés ou les signaux d'entrée 625/2:1/50Hz PAL, SECAM ou MAC décodés en un signal d'affichage haute définition, à savoir un signal permettant un affichage sur 1250 lignes ou 900 lignes avec un entrelacement 2:1 à une fréquence trame de 100 Hz. Ce dispositif de conversion de fréquence trame comporte un dispositif de traitement des signaux d'entrée de type statique et un dispositif de traitement des signaux d'entrée de type dynamique. La commutation entre le dispositif de traitement des signaux d'entrée de type dynamique et le dispositif de traitement des signaux d'entrée de type statique est commandée par un signal de détection de mouvement. Dans le cas où les signaux en entrée du récepteur sont constitués par des signaux 1250/2: 1/50Hz, HD-MAC, ces signaux comportent en plus des informations vidéo, des informations spécifiques, tel qu'un signal DATV (pour Digitally Assisted Television). Ce signal DATV contient des informations sur le mouvement ou le non-mouvement des pixels d'une trame à une autre. Ces informations sont donc utilisées comme signal de détection de mouvement.

Ainsi, dans le dispositif ci-dessus, lorsque l'on réalise une conversion de fréquence trame des signaux vidéo, deux types de traitement sont nécessaires en fonction du fait que le signal vidéo en entrée est de type dynamique ou de type statique. Normalement, pour les signaux de type statique, le dispositif de traitement réalise un filtrage vertical passe-bas basé sur une trame, tandis que, pour les signaux de type dynamique, le dispositif de traitement correspondant réalise un filtrage vertical passe-bas basé sur une image. Si un traitement erroné est sélectionné, cela entraîne des erreurs importantes sur le signal qui se répercutent sur le signal affiché. Or, le signal DATV utilisé pour la commutation entre les deux dispositifs fournit, une fois décodé, un signal contenant des informations de mouvement synchrone du signal vidéo 1250/2:1/50Hz. Ce signal indique si un pixel particulier doit être traité comme statique ou en mouvement. Toutefois, pour que ce signal DATV puisse être utilisé comme signal de détection de mouvement réalisant la commutation entre le dispositif de traitement de type statique et le dispositif de traitement de type dynamique dans le dispositif de conversion de fréquence trame, il est nécessaire que ce signal soit traité de manière à transformer l'information de mouvement en un signal de détection de mouvement à la fréquence trame et au nombre de lignes souhaités.

La présente invention a donc pour but de proposer un dispositif permettant de transformer l'information de mouvement contenue dans les signaux vidéo d'un récepteur de télévision haute définition en un signal de détection de mouvement à la fréquence trame et au nombre de lignes souhaités.

La présente invention a aussi pour but de proposer un dispositif tel que décrit ci-dessus qui peut être utilisé pour un affichage de type 1250/2:1/100Hz ou 900/2:1/100Hz ou présentant des caractéristiques différentes au niveau du nombre de lignes.

En conséquence, la présente invention a pour objet un dispositif pour transformer l'information de mouvement contenue dans le signal DATV associé à un signal vidéo de type haute définition à une première fréquence trame en un signal de détection de mouvement à une seconde fréquence trame, qui comporte :

- au moins un ensemble de deux mémoires pour stocker à la première fréquence trame, respectivement, des données relatives à l'information de mouvement des trames paires et des données relatives à l'information de mouvement des trames impaires, ces mémoires étant lues à la seconde fréquence trame, et
- un circuit de traitement connecté en sortie des mémoires, ledit circuit permettant de synchroniser le signal de détection de mouvement à la seconde fréquence trame avec le signal vidéo de type haute définition à la seconde fréquence trame.

En général, les données relatives à l'information de mouvement sont constituées par une position binaire ou bit pour un pixel. Dans ce cas, la capacité des mémoires devra être de 576 x 1 440 x 1 bits. Cependant, le plus souvent, les données relatives à l'information de mouvement concernent un bloc de plusieurs pixels sur plusieurs lignes consécutives. En général, chaque bloc à une taille de 16 pixels x 16 lignes par trame. Dans ce cas, les données relatives à l'information de mouvement sont constituées par au moins un bit pour un bloc de pixels.

Selon une autre caractéristique de la présente invention, les données relatives à l'information de mouvement sont constituées par plusieurs bits réalisant un codage. A titre d'exemple, ce codage peut donner des informations sur la vitesse de l'information de mouvement.

Selon un mode de réalisation préférentiel, le circuit de traitement est constitué par deux filtres verticaux identiques connectés respectivement en sortie des mémoires de trames paire et impaire, un additionneur recevant la sortie des deux filtres et un comparateur comparant la sortie de l'additionneur à une valeur de seuil de manière à sortir un signal de détection de mouvement ou de non mouvement à la fréquence trame et au nombre de lignes souhaités.

Dans le cas du circuit décrit ci-dessus, on détecte uniquement un mouvement ou un non-mouvement. Toutefois, il est possible de remplacer le comparateur donnant une commutation à deux niveaux par un commutateur progressif donnant des indications plus détaillées sur la vitesse du mouvement. Selon un mode de réalisation utilisé dans ce cas, le circuit de traitement est constitué par deux filtres verticaux identiques connectés respectivement en sortie des mémoires de trames paire et impaire, un additionneur recevant la sortie des deux filtres et un moyen générant à partir de la sortie de l'additionneur un coefficient fonction de l'information de mouvement.

D'autre part, chaque filtre vertical est constitué par n cellules à retard donnant un retard d'une ligne vidéo, n + 1 multiplicateurs recevant chacun un coefficient multiplicateur spécifique en fonction du nombre de lignes à afficher et sur l'autre entrée, soit l'entrée de la première cellule, soit la sortie de la cellule de rang j, j étant compris entre 1 et n, un premier additionneur additionnant la sortie des deux premiers multiplicateurs et n - 1 additionneurs additionnant la sortie de l'additionneur précédent et celle du multiplicateur de rang k + 1, k étant compris entre 1 et n.

Le filtre ci-dessus peut être utilisé aussi bien dans le cas d'un affichage sur 1250 lignes que sur 900 lignes. Si les signaux doivent être afficher uniquement sur 1250 lignes, le circuit de traitement peut être constitué uniquement par des cellules à retard donnant un retard d'une ligne mémoire de manière à synchroniser les informations de mouvement avec les signaux vidéo.

D'autres caractéristiques et avantages de la présente invention apparaîtront à la lecture de la description faite ci-après de divers modes de réalisation, avec référence aux dessins ci-annexés, dans lesquels :

- la figure 1 est un schéma synoptique simplifié d'un récepteur de télévision haute définition comportant un dispositif de conversion de fréquence trame tel que décrit dans le brevet français FR-A-2 644 956 ;
- la figure 2 est un schéma synoptique d'un dispositif de traitement de l'information de mouvement dans le cas d'une conversion 1250/2:1/50Hz en 1250/2:1/100Hz ;
- la figure 3 est un chronogramme expliquant le fonctionnement du dispositif de la figure 1 ;
- la figure 4 est un dispositif de traitement de l'information de mouvement utilisé plus particulièrement dans le cas d'une conversion 1250/2:1/50Hz en 900/2:1/100Hz, et
- la figure 5 est un schéma synoptique d'un dispositif de traitement associé à un dispositif de conversion de fréquence trame utilisant une commutation progressive.

Pour simplifier la description, dans les différentes figures les mêmes éléments portent les mêmes références.

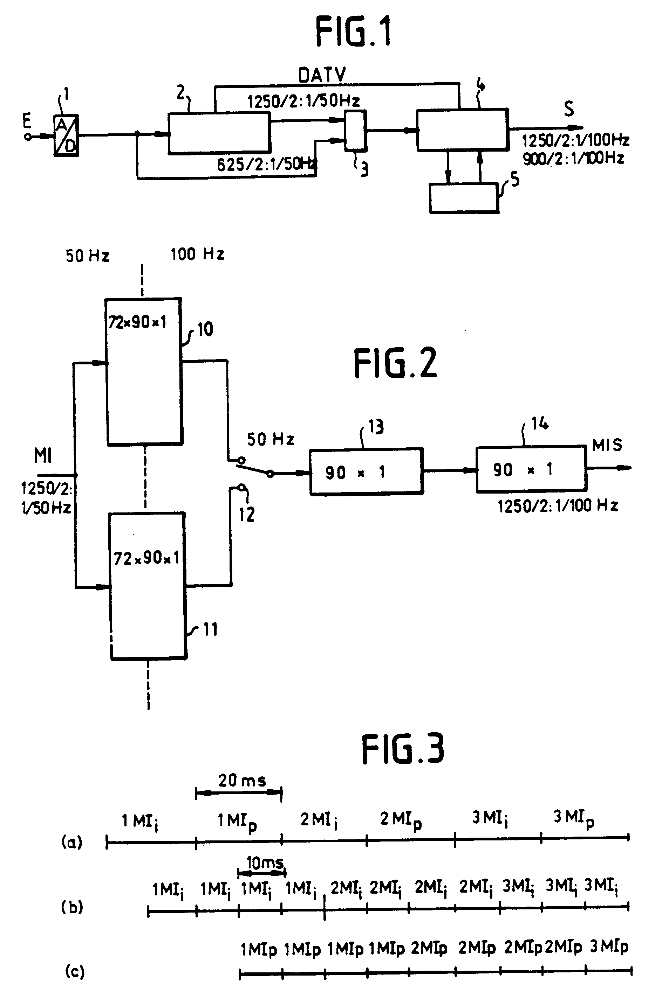

Sur la figure 1, on a représenté succinctement la structure de base d'un récepteur de télévision haute définition. Ce téléviseur comporte essentiellement un convertisseur analogique-numérique 1 qui reçoit en entrée des signaux vidéo E tels que des signaux 1250/2:1/50Hz HD-MAC ou des signaux 625/2:1/50Hz PAL, SECAM ou MAC. Les signaux du type 625/2:1/50Hz en sortie du convertisseur 1 sont envoyés directement sur un dispositif de commutation 3 tandis que les signaux 1250/2:1/50Hz sont envoyés sur le dispositif 3 par l'intermédiaire d'un décodeur 2 avec réduction de largeur de bande de type connu. Le dispositif 3 envoie soit des signaux 1250/2:1/50Hz, soit des signaux 625/2:1/50Hz vers un dispositif de conversion de fréquence 4 tel que décrit dans le brevet français FR-A-2 644 956 au nom de la Demanderesse. Le dispositif de conversion de fréquence 4 reçoit une information DATV (Digital Assisted Television en langue anglaise). Ce signal DATV issu du décodeur 2 comporte des informations de mouvement et doit être transformé en un signal compatible avec un affichage 1250/2: 1/100Hz ou 900/2: 1/100Hz pour pouvoir être utilisé dans le dispositif 4. D'autre part, le récepteur de télévision de la figure 1 comporte un dispositif de détection de mouvement 5 connecté au dispositif de conversion de fréquence 4 permettant de réaliser une détection de mouvement dans une image de télévision PAL, SECAM, MAC décodée qui ne comporte pas de signal DATV. Le signal de sortie 5 est utilisé pour l'affichage sur l'écran. Il s'agit d'un signal haute définition du type 1250/2:1/100Hz ou 900/2:1/100Hz.

On décrira maintenant, avec référence à la figure 2, un mode de réalisation d'un dispositif pour transformer l'information de mouvement contenue dans les signaux vidéo d'un récepteur de télévision haute définition, plus particulièrement dans le signal DATV issu du décodeur 2, en un signal de détection de mouvement à la fréquence trame et au nombre de lignes souhaités pouvant être exploité dans le dispositif de conversion de fréquence 4 dans le cas d'un récepteur de télévision du type décrit à la figure 1.

Sur la figure 2, on a représenté la structure d'un dispositif simplifié conforme à la présente invention qui est utilisé lorsque le signal vidéo en entrée est un signal 1250/2:1/50Hz et que le signal d'affichage est un signal haute définition du type 1250/2:1/100Hz. Dans ce cas, il faut réaliser uniquement une conversion de fréquence et une égalisation des temps de tranfert de manière à obtenir un signal de détection de mouvement ou de non mouvement synchrone avec les signaux vidéo à afficher. Dans le mode de réalisation représenté, on se réfère au cas où l'information de mouvement est codée sur la base d'un bit pour un bloc de plusieurs pixels ou plusieurs lignes adjacentes. Dans le cas présent, l'on a un bit d'information de mouvement pour un bloc de 16 pixels par 16 lignes trames. Ce codage permet de diminuer la taille mémoire. En effet, comme représenté sur la figure 2, le dispositif conforme à la présente invention comporte deux mémoires 10, 11 présentant chacune une capacité de 72 lignes x 90 mots x un bit. La mémoire 10 stocke les informations de mouvement concernant les trames impaires tandis que la mémoire 11 stocke les informations de mouvement concernant les trames paires. Dans le cas où l'on aurait une information de mouvement pour chaque pixel, la capacité de stockage des mémoires devrait être de 567 x 1440 x 1 bits. Le stockage des informations de mouvement dans les mémoires 10 et 11 est réalisé à la fréquence trame du signal vidéo en entrée à savoir à 50Hz, dans le cas présent. Conformément à la présente invention, pour obtenir le signal de détection de mouvement ou de non mouvement souhaité pouvant être utilisé à une fréquence trame de 100Hz, les mémoires 10 et 11 sont lues à la fréquence trame du signal vidéo de sortie, à savoir à la fréquence de 100Hz. Les mémoires sont connectées en entrée d'un multiplexeur 12 ou dispositif de commutation qui connecte alternativement la mémoire 10 et la mémoire 11 en entrée d'un circuit de traitement qui, dans le présent cas, est constitué par deux cellules à retard 13 et 14 ayant une capacité d'une ligne mémoire à savoir de 90 x 1 bits. La commutation entre les deux mémoires est réalisée à la fréquence de 50Hz. L'utilisation des deux cellules à retard 13 et 14 permet d'obtenir en sortie une information MIS synchrone de l'information vidéo à traiter. Le signal MIS ainsi obtenu peut être utilisé directement pour réaliser la commutation entre les filtres verticaux de type statique et les filtres verticaux de type dynamique utilisés dans le dispositif de conversion de fréquence décrit dans le brevet français FR-A-2 644 956 au nom de la Demanderesse.

On expliquera maintenant le fonctionnement du dispositif de la figure 2 en se référant plus particulièrement au chronogramme de la figure 3. Le signal (a) correspond au signal d'entrée à 50Hz et représente les informations de mouvement pour des trames successives $1MI_i$, $1MI_p$, $2MI_i$, $2MI_p$, $3MI_i$, $3MI_p$, etc ... dont la durée est de 20 millisecondes. Dans ce cas, les informations de mouvement correspondant aux trames impaires $1MI_i$, $2MI_i$, $3MI_i$ sont stockées dans la mémoire de trame 10. De même, les informations de mouvement correspondant aux trames paires $1MI_p$, $2MI_p$, $3MI_p$ sont stockées dans la mémoire 11. Les mémoires 10 et 11 sont lues à une fréquence de 100Hz. On obtient donc en sortie de la mémoire 10 les données MI telles que représentées sur le diagramme (b) et en sortie de la mémoire 11 les données d'informations de mouvement représentées sur le diagramme (c) de la figure 3. Ainsi en sortie des mémoires 10 et 11, on obtient à une fréquence double de la fréquence de départ, respectivement les informations de mouvement $1MI_i$, $1MI_i$, $1MI_i$, $1MI_i$, $2MI_i$, $2MI_i$, $2MI_i$, $2MI_i$ ... et les informations de mouvement $1MI_p$, $1MI_p$, $1MI_p$, $1MI_p$, $2MI_p$, $2MI_p$, $2MI_p$, ... , ces informations étant maintenues chacune quatre fois. Ces informations sont ensuite multiplexées par le multiplexeur 12 de manière à obtenir en sortie une information MIS à la fréquence 100Hz dans le présent cas.

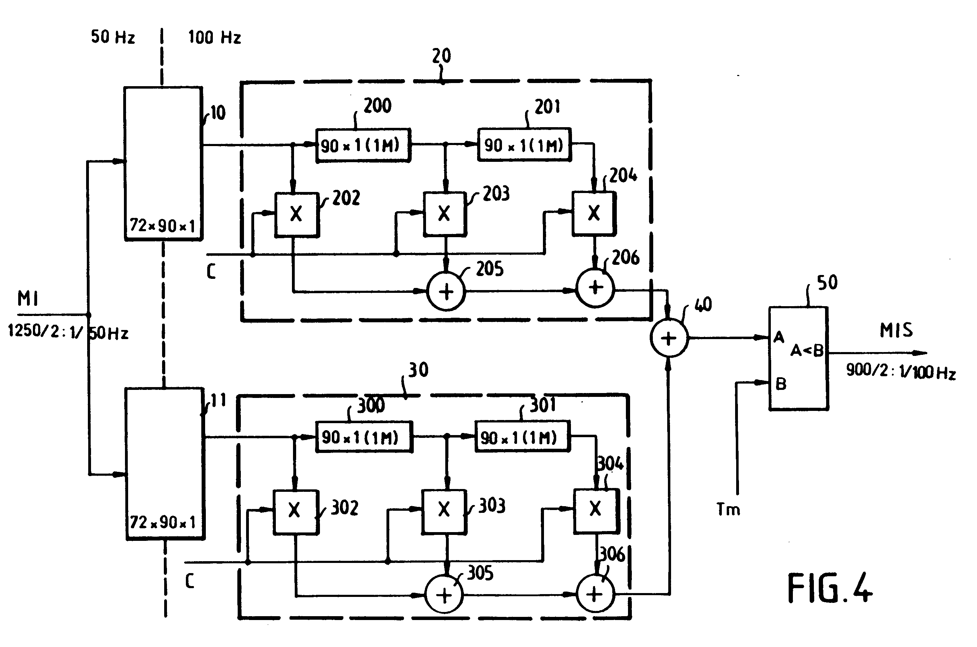

On décrira maintenant, avec référence à la figure 4, un mode de réalisation d'un dispositif conforme à la présente invention qui peut être utilisé notamment dans le cas où l'on affiche le signal vidéo sur 900 lignes.

Le circuit de la figure 4 comporte les deux mémoires 10 et 11 dans lesquelles sont stockées les informations de mouvement relatives aux trames impaires et aux trames paires, respectivement. Le stockage est réalisé à une fréquence de 50Hz et les mémoires sont lues à une fréquence double, à savoir 100Hz dans le mode de réalisation représenté. Conformément à la présente invention, on utilise en sortie de chaque mémoire un circuit de filtrage 20 ou 30. Chaque circuit de filtrage est constitué, dans le mode de réalisation représenté, de deux cellules à retard d'une ligne 200, 201 ou 300, 301, de trois multiplicateurs ou cellules d'addition ou de décalage 202, 203, 204 ou 302, 303, 304 et de deux additionneurs 205, 206 ou 305, 306. Les cellules à retard ont une capacité de 90 x 1 bits. Elles permettent de stocker chacune une ligne de la mémoire stockant les informations de mouvement. Les multiplicateurs sont connectés de la manière ci-après. Ils reçoivent sur une de leur entrées un coefficient multiplicateur spécifique à chaque multiplicateur et envoyé sous l'action d'un signal de commande C. Ces coefficients multiplicateurs sont fonction de l'échantillonnage du signal à afficher. En fait, les coefficients multiplicateurs utilisés dans ce cas seront identiques aux coefficients multiplicateurs utilisés pour le dispositif de conversion de fréquence décrit dans le brevet français FR-A-2 644 956. Les multiplicateurs reçoivent sur leur autre entrée soit directement la sortie des mémoires correspondantes 10 ou 11, soit la sortie des cellules à retard d'une ligne 200, 201 ou 300, 301. Les sorties des multiplicateurs 202, 203, 204 ou 302, 303, 304 sont envoyées sur les additionneurs 205, 206 ou 305, 306 de telle sorte que l'additionneur 205 reçoit les sorties des multiplicateurs 202 et 203 ou 302 et 303 et que l'additionneur 206 ou 306 reçoit la sortie de l'additionneur 205 ou 305 et du multiplicateur 204 ou 304. En fait, les filtres verticaux utilisés ici présentent la même structure de base que les filtres verticaux décrits dans le brevet français FR-A-2 644 956. Les sorties des deux filtres verticaux 20 et 30 sont envoyées sur un additionneur 40. La sortie de l'additionneur 40 est envoyée sur un comparateur 50 qui effectue une comparaison entre le signal contenant une information de mouvement ainsi obtenu et une valeur de seuil Tm. Ainsi, après sommation des contributions des trames impaire et paire 10 et 11, la sortie du filtre, à savoir la sortie de l'additionneur 40, est comparée à la valeur de seuil Tm. On notera que, comme la donnée relative à l'information de mouvement est codée sous forme d'un "1" pour les signaux statiques et d'un "0" pour les signaux de type dynamique, lorsque la valeur de sortie du filtre sera la plus élevée, alors le signal vidéo en entrée sera traité comme un signal statique. A la limite, avec des données relatives à l'information de mouvement indiquant un mouvement sur l'ensemble des lignes traitées, à savoir cinq lignes dans le présent cas, la sortie du filtre sera égale à la somme de tous les coefficients du filtre référencés Sm. En conséquence, en fonction du seuil, le circuit peut être polarisé vers un fonctionnement dans le mode statique ou dans le mode dynamique. En général, on choisit la valeur de seuil Sm, telle que : $O < Tm < Sm$.

Si la sortie du filtre est supérieure à Tm, alors on choisit le traitement statique tandis que si la sortie du filtre est inférieure à Tm, on choisit le traitement dynamique. A titre d'exemple, une valeur de seuil raisonnable sera une valeur réalisant la commutation entre un traitement statique et un traitement dynamique dans le cas où les données relatives à l'information de mouvement provenant d'au moins trois lignes dans le filtre vertical correspondent à un signal vidéo en mouvement.

Le dispositif ci-dessus peut aussi être utilisé dans le cas d'une conversion 1250/2:1/50Hz en 1250/2:1/100Hz. Alors, les coefficients multiplicateurs appliqués sur les multiplicateurs 202, 203 ou 302, 303 seront égaux à "0" tandis que le coefficient multiplicateur appliqué sur le multiplicateur 204 ou 304 sera égal à "1".

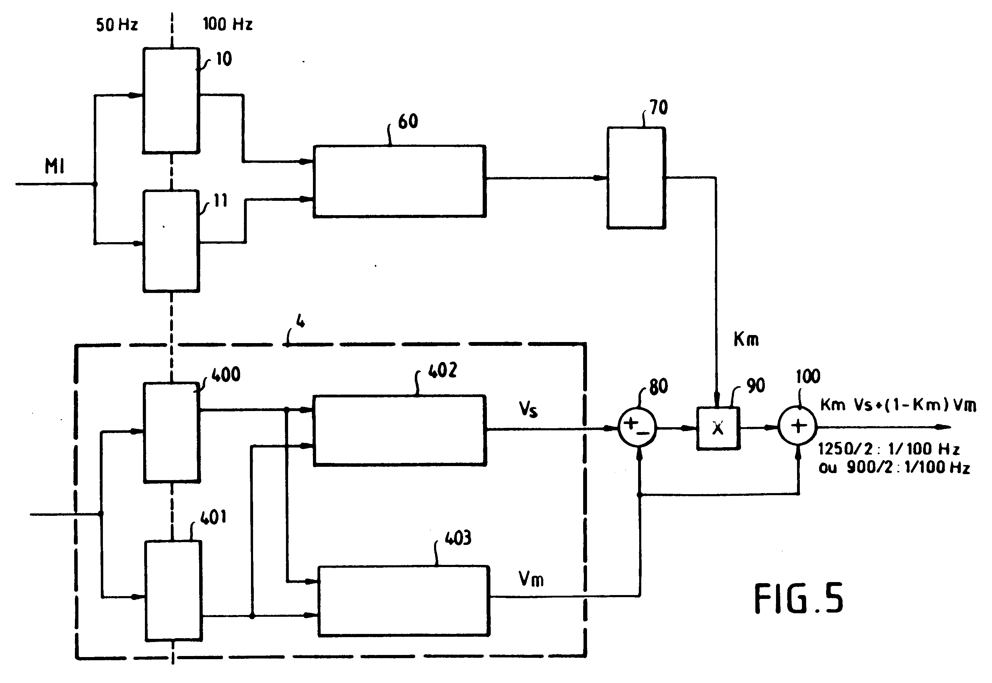

On décrira maintenant avec référence à la figure 5, le cas où le signal de détection de mouvement n'est plus un signal du type tout ou rien, mais permet de réaliser une commutation progressive.

Sur la figure 5, on a représenté schématiquement le dispositif de conversion de fréquence trame 4. Ce dispositif de conversion de fréquence trame comporte respectivement une mémoire pour stocker les trames impaires 400 et une mémoire pour stocker les trames paires 401. Il comporte un dispositif de traitement des signaux de type statique 402 qui reçoit en entrée les sorties des deux mémoires 400 et 401, et émet en sortie un signal vidéo de type statique. Il comporte aussi un dispositif de traitement des signaux de type dynamique 403 qui reçoit en entrée les sorties des deux mémoires 400 et 401 et émet en sortie un signal vidéo de type dynamique. Pour une description plus détaillée du dispositif 4, on se référera

au brevet français FR-A-2 644 956 au nom de la Demanderesse. D'autre part, sur la figure 5, on a représenté un dispositif pour transformer l'information de mouvement contenue dans les signaux vidéo en un signal de détection de mouvement comme décrit ci-dessus. Ce dispositif comporte donc deux mémoires 10 et 11 stockant respectivement les informations de mouvement relatives aux trames impaires et paires, ces deux mémoires étant connectées en entrée d'un circuit de traitement 60 du type de celui décrit à la figure 4 mais ne comportant pas de comparateur 50. En conséquence, le circuit 60 comporte les filtres verticaux 20 et 30 et l'additionneur 40. Le signal en sortie de l'additionneur 40 est envoyé sur une table 70 qui émet en sortie un coefficient $K_m$ qui est, par exemple, fonction de la vitesse de l'information de mouvement. Comme représenté sur la figure 5, les sorties des signaux vidéo de type statique et de type dynamique issues du circuit 4 sont envoyées sur un soustracteur 80 réalisant le soustraction $(V_s - V_m)$. La sortie du soustracteur est envoyée sur un multiplicateur 90 qui reçoit sur son autre entrée le coefficient $K_m$. De même la sortie du multiplicateur 90 ainsi que les signaux vidéo de type dynamique $V_m$ sont envoyés en entrée d'un additionneur 100 de manière à réaliser l'équation :

$$K_m V_s + (1 - K_m) V_m$$

On effectue donc un mixage des sorties des filtres verticaux de type statique et de type dynamique, ce qui permet d'obtenir une transition plus progressive au niveau de l'affichage entre les images en mouvement et les images statiques.

On a décrit ci-dessus différents modes de réalisation préférentiels d'un dispositif conforme à la présente invention. Toutefois, il est évident pour l'homme de l'art que différentes modifications pourraient être apportées à ce mode de réalisation sans sortir du cadre de l'invention. Ainsi, l'information de mouvement pourrait être codée sur plusieurs bits. Ce codage donnerait alors, par exemple, une information sur la vitesse du mouvement du signal. A titre d'exemple, si les données relatives à l'information de mouvement sont codées avec deux bits, on obtiendra quatre valeurs binaires, la valeur binaire "0" pouvant indiquer un mouvement rapide, la valeur binaire "3" pouvant indiquer que les signaux sont statiques, et les valeurs binaires "1" et "2" pouvant indiquer des signaux en mouvement plus lents. Dans ce cas, les dispositifs décrits ci-dessus devraient être modifiés en ce qui concerne la capacité de stockage des mémoires, la capacité des cellules à retard, et la valeur de seuil notamment. De plus, une information supplémentaire pourrait être décodée à partir du signal DATV originel permettant de sélectionner une des différentes valeurs de seuil parmi plusieurs valeurs de seuil.

D'autre part, les coefficients appliqués aux multiplicateurs peuvent être modifiés sans changer toute la structure pour s'adapter à des standards d'entrée et de sortie non décrits ci-dessus. De plus, les dispositifs de la présente invention peuvent être utilisés avec des signaux vidéo émis ou afficher à des fréquences trame différentes que celles mentionnées à la présente description.

## Revendications

1. Dispositif de transformation de l'information de mouvement contenue dans le signal DATV associé à un signal video de type haute définition à une première fréquence trame, en un signal de détection de mouvement à une seconde fréquence trame, ce dispositif étant associé à un dispositif de conversion de fréquence trame pour un recepteur de télévision haute définition recevant en entrée ledit signal vidéo de type haute définition à une première fréquence trame et donnant en sortie un signal vidéo à la seconde fréquence trame, caractérisé en ce qu'il comporte :
   - au moins un ensemble de deux mémoires (10,11) pour stocker à la première fréquence trame, respectivement, des données relatives à l'information de mouvement des trames paires et des données relatives à l'information de mouvement des trames impaires, ces mémoires étant lues à la seconde fréquence trame, et
   - un circuit de traitement (13,14) connecté en sortie des mémoires permettant de synchroniser le signal de détection de mouvement à la seconde fréquence trame avec le signal vidéo de type haute définition à la seconde fréquence trame.

2. Dispositif selon la revendication 1, caractérisé en ce que les données relatives à l'information de mouvement sont constituées par au moins un bit pour un pixel.

3. Dispositif selon la revendication 1, caractérisé en ce que les données relatives à l'information de mouvement sont constituées par au moins un bit pour un bloc de pixels.

4. Dispositif selon les revendications 2 ou 3, caractérisé en ce que les données relatives à l'information de mouvement sont constituées par plusieurs bits réalisant un codage sur la vitesse de l'information de mouvement.

5. Dispositif selon l'une quelconque des revendications 1 à 4, caractérisé en ce que le circuit de traitement est constitué par deux filtres (20, 30) verticaux identiques connectés respectivement en sortie des mémoires (10, 11), un additionneur (40) recevant les sorties des deux filtres et un comparateur (50) comparant la sortie de l'additionneur à une valeur de seuil (Tm) de manière à sortir un signal de détection de mouvement ou de non-mouvement à la seconde fréquence de trame et avec un nombre de lignes différent du nombre de lignes du signal vidéo en entrée.

6. Dispositif selon l'une quelconque des revendications 1 à 4, caractérisé en ce que le circuit de traitement est constitué par deux filtres verticaux identiques connectés respectivement en sortie des mémoires, un additionneur recevant les sorties des deux filtres et un moyen (70) générant à partir de la sortie de l'additionneur un coefficient choisi en fonction des informations de mouvement

7. Dispositif selon l'une quelconque des revendications 5 et 6, caractérisé en ce que chaque filtre vertical (20,30) est constitué par n cellules à retard (200, 201 ou 300, 301) donnant un retard d'une ligne vidéo, n + 1 multiplicateurs recevant chacun sur une entrée un coefficient multiplicateur (202, 203, 204, ou 302, 303, 304) spécifique, dépendant du rapport entre le nombre de lignes reçu et le nombre de lignes à afficher et sur l'autre entrée soit l'entrée de la première cellule, soit la sortie de la cellule de rang j, j étant compris entre 1 et n, un premier additionneur (205 ou 305) additionnant la sortie des deux premiers multiplicateurs et n - 1 additionneurs (206 ou 306) additionnant la sortie de l'additionneur précédant et celle du multiplicateur de rang k + 1, k étant compris entre 1 et n.

8. Dispositif selon l'une quelconque des revendications 1 à 4, caractérisé en ce que, le circuit de traitement est constitué par n cellules à retard (13, 14) en série donnant un retard d'une ligne-mémoire de manière à synchroniser le signal de détection de mouvement avec l'information vidéo, la première cellule (13) étant connectée en sortie des mémoires (10, 11) par l'intermédiaire d'un multiplexeur (12) fonctionnant à la fréquence trame d'entrée.

## Claims

1. Device for converting the movement information, contained in the DATV signal associated with a video signal of high-definition type at a first frame frequency, into a movement detection signal at a second frame frequency, this device being combined with a frame frequency conversion device for a high-definition television receiver receiving the said video signal of high-definition type as input at a first frame frequency and giving a video signal at the second frame frequency at the output, characterized in that it includes:

- at least one set of two memories (10, 11) for storing, at the first frame frequency, respectively data relating to the movement information of the even frames and data relating to the movement information of the odd frames, these memories being read at the second frame frequency, and
- a processing circuit (13, 14) connected at the output of the memories, making it possible to synchronize the movement detection signal at the second frame frequency with the video signal of high-definition type at the second frame frequency.

2. Device according to Claim 1, characterized in that the data relating to the movement information consist of at least one bit for one pixel.

3. Device according to Claim 1, characterized in that the data relating to the movement information consist of at least one bit for one block of pixels.

4. Device according to Claims 2 or 3, characterized in that the data relating to the movement information consist of several bits representing a coding on the speed of the movement information.

5. Device according to any one of Claims 1 to 4, characterized in that the processing circuit consists of two identical vertical filters (20, 30) connected respectively at the output of the memories (10, 11), an adder (40) receiving the outputs of the two filters and a comparator (50) comparing the output of the adder with a threshold value (Tm) in such a way as to extract a movement or non-movement detection signal at the second frame frequency, with a number of lines which is different from the number of lines of the input video signal.

6. Device according to any one of Claims 1 to 4, characterized in that the processing circuit consists of two identical vertical filters connected respectively at the output of the memories, an adder receiving the outputs of the two filters and a means (70) generating, from the output of the adder, a coefficient which is chosen as a function of the movement information.

7. Device according to either of Claims 5 or 6, characterized in that each vertical filter (20, 30) consists of n delay cells (200, 201 or 300, 301) giving a delay of one video line, n + 1 multipliers each receiving, on one input, a specific multiplier coefficient (202, 203, 204, or 302, 303, 304) depending on the ratio between the number of lines received and the number of lines to be displayed and, on the other input, either the input from the first cell, or the output of the cell of order j, j lying between 1 and n, a first adder (205 or 305) adding the output of the first two multipliers, and n - 1 adders (206 or 306) adding the output of the preceding adder and that of the multiplier of order k + 1, k lying between 1 and n.

8. Device according to any one of Claims 1 to 4, characterized in that the processing circuit consists of n delay cells (13, 14) in series, giving a delay of one memory line in such a way as to synchronize the movement detection signal with the video information, the first cell (13) being connected at the output of the memories (10, 11) by the use of a multiplexer (12) operating at the input frame frequency.

**Patentansprüche**

1. Vorrichtung zur Umwandlung der Bewegungsinformation, die in dem einem HD-Videosignal (HD = high definition) mit einer ersten Halbbildfrequenz zugeordneten DATV-Signal enthalten ist, in ein Signal zur Erfassung der Bewegung mit einer zweiten Halbbildfrequenz, wobei diese Vorrichtung einer Vorrichtung zur Umwandlung der Halbbildfrequenz für einen HD-Fernsehempfänger zugeordnet ist, die am Eingang das HD-Videosignal mit einer ersten Halbbildfrequenz empfängt und ausgangsseitig ein Videosignal mit einer zweiten Halbbildfrequenz liefert, dadurch gekennzeichnet, daß die Vorrichtung aufweist:
- mindestens eine Gruppe von zwei Speichern (10, 11), um mit der ersten Halbbildfrequenz Daten bezüglich der Bewegungsinformation der geradzahligen Halbbilder bzw. Daten bezüglich der Bewegungsinformation der ungeradzahligen Halbbilder zu speichern, wobei diese Speicher mit der zweiten Halbbildfrequenz ausgelesen werden,
- und eine Verarbeitungsschaltung (13, 14), die an den Ausgang der Speicher angeschlossen ist und das Signal zur Bewegungserfassung mit der zweiten Halbbildfrequenz auf das HD-Videosignal mit der zweiten Halbbildfrequenz zu synchronisieren erlaubt.

2. Vorrichtung nach Anspruch 1, dadurch gekennzeichnet, daß die Daten bezüglich der Bewegungsinformation aus mindestens einem Bit je Bildpunkt bestehen.

3. Vorrichtung nach Anspruch 1, dadurch gekennzeichnet, daß die Daten bezüglich der Bewegungsinformation aus mindestens einem Bit für einen ganzen Block von Bildpunkten bestehen.

4. Vorrichtung nach einem der Ansprüche 2 oder 3, dadurch gekennzeichnet, daß die Daten bezüglich der Bewegungsinformation aus mehreren Bits bestehen, die eine Kodierung hinsichtlich der Geschwindigkeit der Bewegungsinformation durchführen.

5. Vorrichtung nach einem beliebigen der Ansprüche 1 bis 4, dadurch gekennzeichnet, daß die Verarbeitungsschaltung aus zwei gleichen vertikalen Filtern (20, 30), die an je einen der Speicher (10, 11) angeschlossen sind, aus einem Addierer (40), der mit den Ausgängen der beiden Filter verbunden ist, und aus einem Komparator (50) besteht, der das Ausgangssignal des Addierers mit einem Schwellenwert (Tm) vergleicht, derart, daß am Komparatorausgang ein Signal zur Erfassung der Bewegung oder Nicht-Bewegung mit der zweiten Halbbildfrequenz und mit einer anderen Anzahl von Zeilen als die Anzahl von Zeilen des Videosignals am Eingang ausgegeben wird.

6. Vorrichtung nach einem beliebigen der Ansprüche 1 bis 4, dadurch gekennzeichnet, daß die Verarbeitungsschaltung aus zwei identischen vertikalen Filtern, die an den Ausgang je eines der Speicher angeschlossen sind, aus einem Addierer, der die Ausgangssignale der beiden Filter empfängt, und aus einem Mittel (70) besteht, das ausgehend vom Ausgangssignal des Addierers einen Koeffizienten erzeugt, der abhängig von den Bewegungsinformationen ausgewählt wird.

7. Vorrichtung nach einem beliebigen der Ansprüche 5 und 6, dadurch gekennzeichnet, daß jedes vertikale Filter (20, 30) aus n Verzögerungszellen (200, 201 oder 300, 301), die je eine Verzögerung von einer Videozeile verursachen, aus n+1 Multiplizierern (202, 203, 204 oder 302, 303, 304), die je an einem Eingang einen spezifischen Multiplikationskoeffizienten zugeführt erhalten, der vom Verhältnis zwischen der empfangene Anzahl von Zeilen und der Anzahl von darzustellenden Zeilen abhängt, und an ihrem anderen Eingang entweder das Eingangssignal der ersten Zelle oder das Ausgangssignal der Zelle des Rangs j zugeführt erhalten, wobei j zwischen 1 und n liegt, aus einem ersten Addierer (205 oder 305), der die Ausgangssignale der beiden ersten Multiplizierer addiert, und aus n-1 Addierern (206 oder 306) besteht, die das Ausgangssignal des erstgenannten Addierers und das des Multiplizierers des Rangs k+1 addieren, wobei k zwischen 1 und n liegt.

8. Vorrichtung nach einem beliebigen der Ansprüche 1 bis 4, dadurch gekennzeichnet, daß die Verarbeitungsschaltung aus n Verzögerungszellen (13, 14) in Reihe besteht, die eine Verzögerung von einer Videozeile ergeben, so daß das Signal zur Erfassung der Bewegung mit der Videoinformation synchronisiert wird, wobei die erste Zelle (13) mit dem Ausgang der Speicher (10, 11) über einen Multiplexer (12) verbunden ist, der mit der Halbbildfrequenz des Eingangs betrieben wird.

# FIG.1

DATV

1      2      1250/2:1/50Hz      4

E    A/D             S

625/2:1/50Hz    3

1250/2:1/100Hz
900/2:1/100Hz

5

# FIG.2

50 Hz      100 Hz

72×90×1    10

13      14

50 Hz      90 × 1      90 × 1    MIS

MI

1250/2:
1/50 Hz      12        1250/2:1/100 Hz

72×90×1

11

# FIG.3

20 ms

$1MI_i$    $1MI_p$    $2MI_i$    $2MI_p$    $3MI_i$    $3MI_p$

(a)

10 ms

$1MI_i$   $1MI_i$   $1MI_i$   $1MI_i$   $2MI_i$   $2MI_i$   $2MI_i$   $2MI_i$   $3MI_i$   $3MI_i$   $3MI_i$

(b)

$1MI_p$   $1MI_p$   $1MI_p$   $1MI_p$   $2MI_p$   $2MI_p$   $2MI_p$   $2MI_p$   $3MI_p$

(c)

FIG.4

FIG.5